# FASCICULE DE BREVET EUROPEEN

(11) **EP 1 721 794 B1**
(45) Date de publication et mention de la délivrance du brevet: **08.04.2009**
(21) Numéro de dépôt: 06300445.1
(22) Date de dépôt: 09.05.2006
(51) Int. Cl.: B60S 1/04, F16B 21/06, F16B 21/18

(54) **Dispositif de fixation par enclenchement de deux pièces mécaniques**
Verriegelungsvorrichtung von zwei mechanischen Stücken
Interlocking fastening device of two mechanical pieces

(30) Priorité: 13.05.2005 FR 0504865
(43) Date de publication de la demande: 15.11.2006
(73) Titulaire: Peugeot Citroën Automobiles SA, 78943 Vélizy-Villacoublay Cedex (FR)
(72) Inventeur: Lefèvre, Jacky, 92220, BAGNEUX (FR); Jeuffe, Gérard, 78810, FEUCHEROLLES (FR)

(56) Documents cités:
- EP-A- 0 976 645
- GB-A- 2 263 721

## Description

La présente invention concerne un dispositif de fixation d'une première pièce mécanique sur une deuxième pièce mécanique, comprenant une paire d'éléments de fixation fonctionnant par enclenchement élastique selon une direction d'enclenchement, dans lequel un deuxième élément de la paire comprend un plot, pourvu d'un épaulement et qui fait saillie de la deuxième pièce.

Le document EP 0 976 645 est considéré comme étant l'état de la technique le plus proche et décrit un dispositif de fixation conforme au préambule de la revendication 1.

L'invention s'applique par exemple à un dispositif de fixation d'un mécanisme d'essuie-vitre sur une partie de caisse de véhicule automobile.

On connaît, dans l'état de la technique, des mécanismes d'essuie-vitre montés au moyen d'un tel dispositif de fixation. Par exemple, certains de ces dispositifs de fixation fonctionnent par engagement et enclenchement de deux extrémités d'un axe de mécanisme dans deux paliers respectifs, chacun formant une pince solidaire de la structure du véhicule.

Les dispositifs de fixation connus de ce type ont notamment pour inconvénient d'assurer un maintien insuffisant de la paire d'éléments de fixation en position enclenchée, c'est-à-dire en position de service. C'est le cas en particulier lorsque ces dispositifs servent à fixer des pièces soumises à des niveaux de vibrations élevés, et de façon plus particulière encore, lorsque la pièce à fixer a une masse importante.

La liaison, et notamment l'ouverture d'engagement de l'élastomère, sous l'effet du vieillissement et sous l'effet des sollicitations en dynamique, peut s'évaser et ne plus assurer la tenue mécanique de l'assemblage.

L'invention a pour but de remédier à cet inconvénient, et a pour objet, à cet effet ,un dispositif du type ci-dessus, dans lequel le premier élément de fixation de la paire comprend un réceptacle en matériau élastomère solidaire de la première pièce, ayant un logement complémentaire du plot, et un col déformable prévu pour coopérer avec l'épaulement de façon à bloquer le plot dans le logement, et dans lequel le premier élément comprend un insert agencé dans le réceptacle et adapté pour assurer la rigidification de ce dernier au niveau du col.

Selon des caractéristiques, optionnelles, de l'invention, prises seules ou suivant toutes les combinaisons techniquement envisageables :
- l'insert est réalisé en métal ;
- l'insert est réalisé en matière plastique ;
- le plot et le logement ont des formes de révolution, et l'insert s'étend selon un cercle coaxial avec le logement ;
- l'insert a une forme générale en arc de cercle ;
- le réceptacle est surmoulé sur l'insert ;
- l'insert est rapporté et fixé dans une gorge correspondante du réceptacle ;
- le plot a une forme d'ogive ;
- le plot a une forme sphérique ; et
- le dispositif comprend en outre deux autres paires d'éléments de fixation formant liaisons pivot coaxiales procurant une liberté de rotation de la première pièce par rapport à la deuxième pièce suivant un axe sensiblement orthogonal à la direction d'enclenchement.

L'invention vise également un dispositif de fixation d'un mécanisme d'essuie-vitre sur une partie de caisse de véhicule, constitué d'un dispositif tel que décrit précédemment.

Des modes particuliers de réalisation de l'invention vont maintenant être décrits en référence aux dessins annexés, sur lesquels :
- la Figure 1 est une vue en coupe schématique, dans un plan médian vertical, d'une paire d'éléments de fixation d'un dispositif de fixation conforme à l'invention, en configuration assemblée ;
- la Figure 2 est une vue en coupe à plus grande échelle, dans le plan 2-2, de la paire d'éléments de fixation représentée sur la Figure 1 ;
- la Figure 3 est une vue en perspective à plus grande échelle de l'insert de rigidification illustré sur les Figures 1 et 2, seul;
- la Figure 4 est une vue analogue à la Figure 1, à plus grande échelle, illustrant un deuxième mode de réalisation de l'invention ;
- la Figure 5 est une vue en coupe, dans le plan 5-5, de la paire d'éléments de fixation illustrée sur la Figure 4 ;
- la Figure 6 est une vue analogue à la Figure 4, illustrant un troisième mode de réalisation de l'invention ; et
- la Figure 7 est une vue en perspective d'un mécanisme d'essuie-vitre monté sur une caisse de véhicule automobile au moyen d'un dispositif de fixation conforme à l'invention.

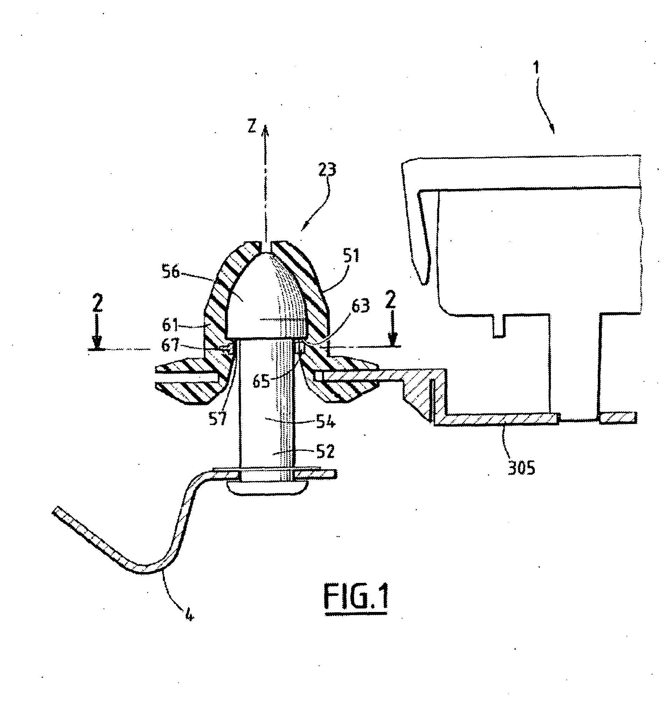

Sur la Figure 1, on a représenté, en position accouplée, une paire d'éléments de fixation d'un dispositif de fixation permettant de fixer, sur une pièce 4 de structure de véhicule automobile, une pièce d'équipement 1.

Pour la commodité de la description qui va suivre, on a orienté les Figures dans un repère X, Y, Z, associé au véhicule sur lequel la pièce d'équipement est supposée montée.

Dans ce repère, l'axe X représente l'axe longitudinal du véhicule orienté vers l'avant, l'axe Y représente l'axe transversal orienté de la gauche vers la droite. Les axes X, Y seront supposés horizontaux, et l'axe Z sera supposé vertical et orienté du bas vers le haut.

Cette paire 23 d'éléments de fixation est constituée d'un premier élément de fixation 51, solidaire du mécanisme 1, et d'un second élément de fixation 52, solidaire du support 4.

Le deuxième élément 52 est formé essentiellement d'une tige cylindrique 54, qui fait saillie verticalement vers le haut du support 4, et d'un plot en forme d'ogive à l'extrémité libre de la tige. Le plot 56 est pourvu d'un épaulement 57 au niveau de la jonction avec la tige 54.

Le premier élément de fixation 51 est essentiellement formé d'un réceptacle en matériau élastomère 61, solidaire de la pièce 1, et qui possède un logement complémentaire du plot ogival 56, et un col déformable 63 formé à l'entrée dudit logement. Ce col 63 est prévu pour coopérer avec l'épaulement 57 du plot, de façon à bloquer axialement ce dernier après engagement. Le col déformable 63 et l'épaulement 57 définissent des moyens complémentaires d'enclenchement élastique, fonctionnant sensiblement selon l'axe Z.

Le réceptacle 61 est intérieurement pourvu d'une gorge périphérique 65, formée sous le col 63.

L'élément de fixation 51 est en outre pourvu d'un insert 67, engagé dans la gorge 65, et assurant une rigidification du réceptacle au niveau du col 63.

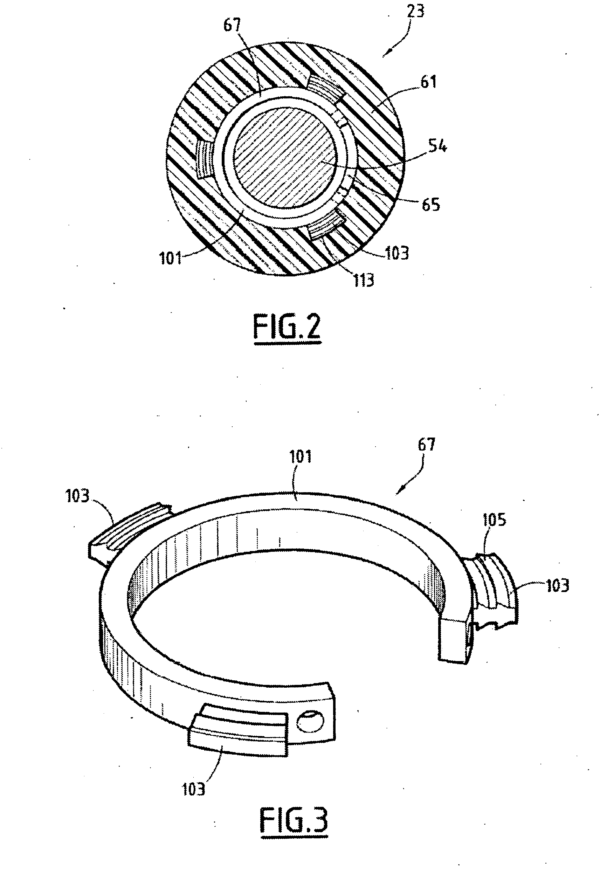

Comme illustré sur les Figures 2 et 3, l'insert 67 comporte un corps annulaire 101 en forme de C, c'est-à-dire de forme générale en arc de cercle. Dans l'exemple représenté, le corps annulaire 101 a une section transversale courante rectangulaire.

L'insert 67 est réalisé dans un matériau de rigidité supérieure à celle du réceptacle 61, ce matériau pouvant être par exemple du métal, et plus particulièrement encore de l'acier ressort. Alternativement, l'insert 67 peut être réalisé en matière plastique.

L'insert 67 comporte en outre des languettes de fixation 103, formées en saillie radiale vers l'extérieur du corps 101. Chaque languette 103 possède des reliefs 105 à section triangulaire, définissant des harpons de fixation dans le réceptacle en élastomère 61.

Comme cela est visible en particulier sur la Figure 2, l'insert 67 est rapporté et fixé coaxialement dans le réceptacle 61, le corps 101 étant logé dans la gorge périphérique intérieure 65 du réceptacle, et les languettes 103 étant insérées à force dans des logements radiaux 113 correspondants du réceptacle.

On comprend que, lors de l'enclenchement du deuxième élément de fixation 52 dans le premier élément de fixation 51, au passage de l'ogive 56 au niveau du col 63, le corps 101 de l'insert 67 s'ouvre élastiquement en s'écartant, et reprend sa forme initiale après enclenchement par retour élastique.

L'insert s'oppose alors au retrait du plot 56 par rapport au réceptacle 61, en ce qu'il s'oppose à la déformation radiale du col 63 dans le sens de l'ouverture.

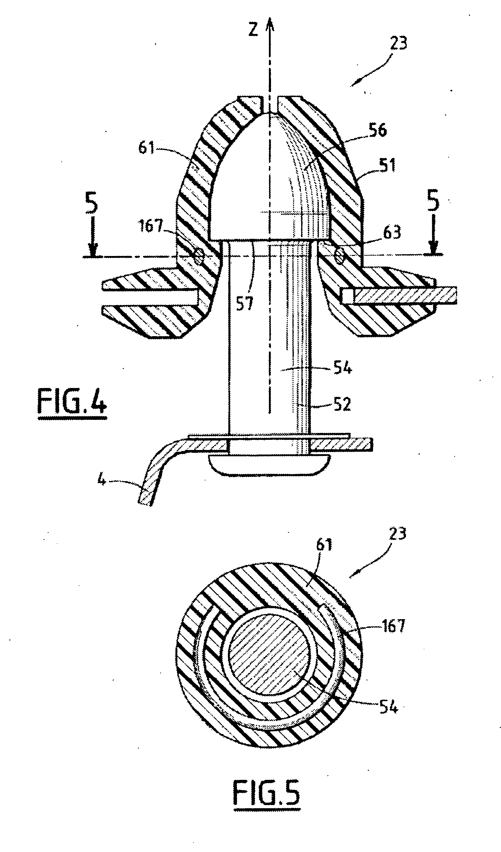

Dans une deuxième forme de réalisation représentée sur les Figures 4 et 5, l'insert 167 est noyé dans le réceptacle 61 en matériau élastomère, le réceptacle étant par exemple surmoulé sur l'insert 167.

L'insert 167 est essentiellement formé d'une partie d'anneau en C, agencé coaxialement dans le réceptacle 61 au niveau du col 63. L'insert 167 est par exemple formé d'un fil métallique, tel qu'un fil d'acier ressort.

Dans l'exemple représenté, l'insert 167 a une section de forme elliptique, mais pourrait être de tout autre forme adaptée, telle que circulaire ou rectangulaire notamment.

De la même façon, l'insert 167 pourrait être formé dans un matériau autre que métallique, de rigidité supérieure à celle du matériau élastomère du réceptacle 161.

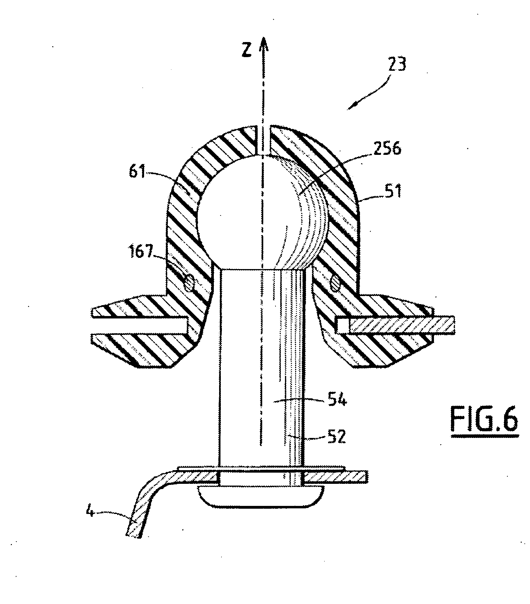

La forme de réalisation représentée sur la Figure 6 ne se distingue de celle décrite en référence aux Fig. 4 et 5 qu'en ce que le plot, désigné ici sous la référence 256, a une forme générale sphérique. Le fonctionnement de la paire d'éléments de fixation ainsi définie est analogue au fonctionnement explicité ci-dessus, et ne sera donc pas décrit de nouveau.

Il va de soi que la forme sphérique du plot 256 peut être associée indifféremment à l'un ou l'autre des inserts 67, 167 précédemment décrits, ou à tout autre insert adapté.

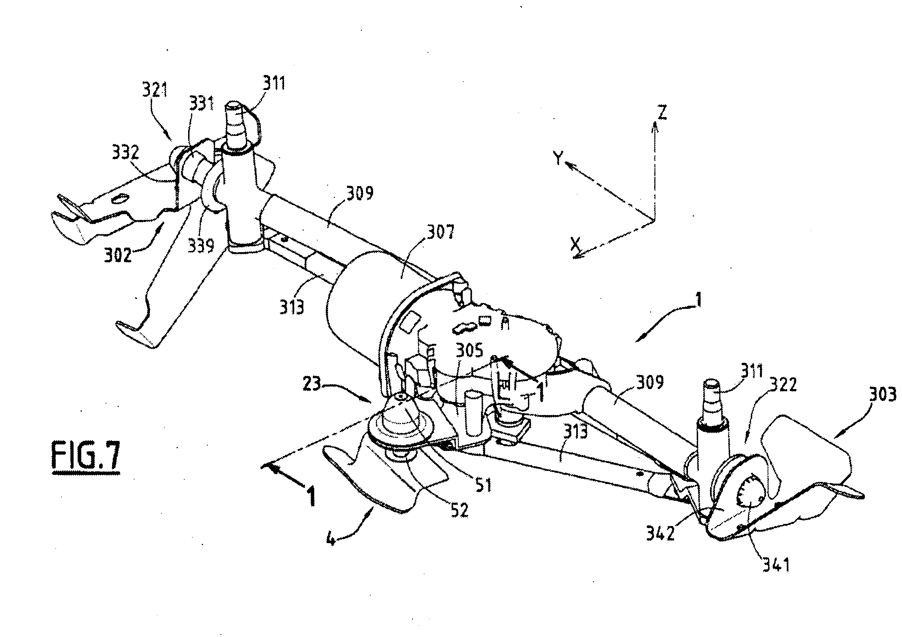

Sur la Figure 7, on a illustré une application particulière de l'invention, la pièce d'équipement 1 étant constituée d'un mécanisme d'essuie-vitre de véhicule automobile.

La pièce de structure 4 est un support de fixation rigide solidaire d'une partie de caisse du véhicule (non représentée). Deux autres supports rigides 302, 303 sont prévus pour la fixation du mécanisme d'essuie-vitre 1.

Ces supports sont, par exemple, réalisés en tôle et soudés sur la caisse.

Le mécanisme 1 comporte essentiellement :
- une platine centrale de support 305,
- un moteur d'entraînement 307 monté sur la platine 305,
- une barre transversale (ou bras transversal) 309, s'étendant de part et d'autre de la platine 305,
- deux arbres 311 montés rotatifs chacun à une extrémité de la barre 309, et destinés à entraîner chacun un balai d'essuie-glace en rotation, et
- une tringlerie 313 prévue pour transmettre le mouvement d'entraînement du moteur 307 à chacun des arbres 311.

Le positionnement et la fixation du mécanisme 1 sur la caisse du véhicule sont réalisés au moyen de la paire 23 d'éléments de fixation précédemment décrite, et de deux paires additionnelles 321, 322 d'éléments de fixation complémentaires.

La première 321 de ces deux paires additionnelles comprend d'une part un téton 331, dont l'extrémité libre est de forme sensiblement hémisphérique. Ce téton fait saillie de la barre 309 à une extrémité de cette dernière (extrémité gauche), sensiblement dans le prolongement de la direction principale de la barre.

La première paire 321 comporte d'autre part un deuxième élément de fixation formé d'une plaquette 332 solidaire du support 302, cette plaquette étant dotée d'un trou circulaire, complémentaire du téton 331.

Lorsque le téton 331 est engagé dans le trou, comme représenté sur la Figure 7, il s'étend suivant l'axe transversal Y, et les deux éléments de fixation 331, 332 définissent une liaison pivot. La plaquette 32 forme un palier d'appui du mécanisme 1 sur la caisse de véhicule. Cette liaison assure une liberté de rotation du mécanisme autour de l'axe Y, et autorise un coulissement suivant l'axe X du téton par rapport à la plaquette 332.

De préférence, la pièce formant le téton 331 est un manchon élastomère, par exemple en caoutchouc. Ce manchon est prévu pour se déformer légèrement en compression lors de son engagement dans le trou, et ainsi assurer une rétention par friction de l'extrémité correspondante du mécanisme, en engagement avec le support 302.

La deuxième 322 des paires additionnelles comprend un téton 341 analogue au téton 331, sensiblement de même axe Y et orienté de façon opposée, agencé à l'autre extrémité du bras transversal 309 (extrémité droite). Le téton 341 constitue le premier élément de fixation de la deuxième paire 322.

La deuxième paire 322, comprend en outre un deuxième élément de fixation, sous la forme d'une plaquette 342 solidaire du support 303, pourvue d'un trou circulaire de réception du téton 341, complémentaire de ce dernier. Le trou circulaire est sensiblement d'axe Y, de sorte que lorsque le téton 341 est engagé dans le trou circulaire, comme représenté sur la Figure 7, la deuxième paire d'éléments de fixation 322 définit une liaison pivot. La plaquette 342 forme un palier d'appui d'une extrémité du bras 309 sur la caisse du véhicule, avec un degré de liberté en rotation autour de l'axe transversal Y.

Il découle de ce qui a été exposé précédemment que les liaisons définies par les première 321 et deuxième 322 paires additionnelles d'éléments de fixation offrent au mécanisme 1 une liberté de rotation suivant l'axe commun Y des paliers, dans chacun des deux sens.

Pour monter et fixer le mécanisme d'essuie-vitre 1 sur la partie de caisse, on procède de la façon suivante :
- on engage successivement les tétons 331, 341 dans les trous correspondants des supports respectifs 302, 303. Au cours de cette première étape de montage, les éléments de fixation 51, 52 de la paire 23 restent dégagés l'un de l'autre, car décalés selon les axes Y et Z ;
- on assemble ensuite les deux éléments de fixation 51, 52 de la paire formant liaison par enclenchement 23, en faisant pivoter le mécanisme 1 autour de l'axe de rotation Y défini par les liaisons pivot 321, 322.

Une fois l'enclenchement réalisé, l'insert 67 assure une rétention accrue des éléments de fixation 51, 52 en position enclenchée, comme illustré sur la Figure 1. Le mécanisme est alors dans la configuration illustrée sur la Figure 7.

Le dispositif de fixation peut être utilisé pour l'assemblage de pièces nécessitant une bonne tenue mécanique, notamment en vieillissement, et une bonne tenue à la fatigue.

Le dispositif montre une liaison d'une pièce élastomère avec un accouplement par une forme ogivale ou sphérique, cette disposition n'étant pas limitative.

D'autres formes peuvent être appropriées selon la liaison à réaliser.

## Revendications

1. Dispositif de fixation d'une première pièce mécanique (1, 305) sur une deuxième pièce (4) mécanique, comprenant une paire (23) d'éléments de fixation fonctionnant par enclenchement élastique selon une direction d'enclenchement (Z), dans lequel un deuxième élément (52) de la paire comprend un plot (56 ; 256), pourvu d'un épaulement (57) et qui fait saillie de la deuxième pièce (4), **caractérisé en ce que** le premier élément de fixation (51) de la paire comprend un réceptacle (61) en matériau élastomère solidaire de la première pièce (1, 305), ayant un logement complémentaire du plot (56), et un col déformable (63) prévu pour coopérer avec l'épaulement (57) de façon à bloquer le plot (56 ; 256) dans le logement, et **en ce que** le premier élément (51) comprend un insert (67; 167) agencé dans le réceptacle (61) et adapté pour assurer la rigidification de ce dernier au niveau du col (63).

2. Dispositif suivant la revendication 1, **caractérisé en ce que** l'insert (67; 167) est réalisé en métal.

3. Dispositif suivant la revendication 1, **caractérisé en ce que** l'insert (67 ; 167) est réalisé en matière plastique.

4. Dispositif suivant l'une quelconque des revendications 1 à 3, **caractérisé en ce que** le plot (56 ; 256) et le logement ont des formes de révolution, et l'insert (67; 167) s'étend selon un cercle coaxial avec le logement.

5. Dispositif suivant la revendication 4, **caractérisé en ce que** l'insert (67; 167) a une forme générale en arc de cercle.

6. Dispositif suivant l'une quelconque des revendications 1 à 5, **caractérisé en ce que** le réceptacle (61) est surmoulé sur l'insert (167).

7. Dispositif suivant l'une quelconque des revendications 1 à 5, **caractérisé en ce que** l'insert (67) est rapporté et fixé dans une gorge correspondante (65) du réceptacle (61).

8. Dispositif suivant l'une quelconque des revendications 1 à 7, **caractérisé en ce que** le plot (56) a une forme d'ogive.

9. Dispositif suivant l'une quelconque des revendications 1 à 7, **caractérisé en ce que** le plot (256) a une forme sphérique.

10. Dispositif suivant l'une quelconque des revendications 1 à 9, **caractérisé en ce qu'**il comprend en outre deux autres paires (321, 322) d'éléments de fixation formant liaisons pivot coaxiales procurant une liberté de rotation de la première pièce (1, 305) par rapport à la deuxième pièce (4) suivant un axe (Y) sensiblement orthogonal à la direction d'enclenchement (Z).

11. Application d'un dispositif conforme à l'une quelconque des revendications 1 à 10 à la fixation d'un mécanisme d'essuie-vitre sur une partie de caisse de véhicule automobile.

## Claims

1. Device for fastening a first mechanical component (1, 305) to a second mechanical component (4), comprising a pair (23) of fastening elements that operate by elastic engagement in a direction (Z) of engagement, in which a second element (52) of the pair comprises a peg (56; 256) provided with a shoulder (57) and which projects from the second component (4), **characterized in that** the first fastening element (51) of the pair comprises a receptacle (61) made of elastomeric material integral with the first component (1, 205) and having a housing that complements the peg (56) and a deformable neck (63) designed to collaborate with the shoulder (57) in such a way as to immobilise the peg (56; 256) in the housing, and **in that** the first element (51) comprises an insert (67; 167) arranged in the receptacle (61) and designed to stiffen the latter at the neck (63).

2. Device according to Claim 1, **characterized in that** the insert (67; 167) is made of metal.

3. Device according to Claim 1**, characterized in that** the insert (67; 167) is made of plastic.

4. Device according to any one of Claims 1 to 3, **characterized in that** the peg (56; 256) and the housing have shapes exhibiting symmetry or revolution and the insert (67; 167) extends in a circle coaxial with the housing.

5. Device according to Claim 4, **characterized in that** the insert (67; 167) has the overall shape of a circular arc.

6. Device according to any one of Claims 1 to 5, **characterized in that** the receptacle (61) is overmoulded onto the insert (167).

7. Device according to any one of Claims 1 to 5, **characterized in that** the insert (67) is attached and fastened into a corresponding groove (65) of the receptacle (61).

8. Device according to any one of Claims 1 to 7, **characterized in that** the peg (56) is ogee shaped.

9. Device according to any one of Claims 1 to 7, **characterized in that** the peg (256) is spherical in shape.

10. Device according to any one of Claims 1 to 9, **characterized in that** it further comprises two further pairs (321, 322) of fastening elements forming coaxial pivot connections to afford the first component (1, 305) a degree of freedom of rotation with respect to the second component (4) about an axis (Y) substantially orthogonal to the direction (Z) of engagement.

11. Application of a device according to any one of Claims 1 to 10 to the fastening of a windscreen wiper mechanism to part of a motor vehicle body shell.

## Patentansprüche

1. Vorrichtung zur Befestigung eines ersten mechanischen Teils (1, 305) an einem zweiten mechanischen Teil (4), mit einem Paar (23) Befestigungselementen, die durch elastische Verriegelung in einer Verriegelungsrichtung (Z) wirken, wobei ein zweites Element (52) des Paars einen Nocken (56; 256) enthält, der mit einer Schulter (57) versehen ist und von dem zweiten Teil (4) vorragt, **dadurch gekennzeichnet, dass** das erste Befestigungselement (51) des Paars ein Gehäuse (61) aus einem mit dem ersten Teil (1, 305) fest verbundenen elastomeren Material, das eine zu dem Nocken (56) komplementäre Aufnahme aufweist, und einen verformbaren Hals (63), der dazu vorgesehen ist, mit der Schulter (57) zur Sperrung des Nockens (56; 256) in der Aufnahme zusammenzuwirken, enthält, und dass das erste Element (51) einen Einsatz (67; 167) aufweist, der in dem Gehäuse (61) angeordnet ist und dazu ausgeführt ist, die Versteifung des Letzteren am Hals (63) zu gewährleisten

2. Vorrichtung nach Anspruch 1, **dadurch gekennzeichnet, dass** der Einsatz (67; 167) aus Metall hergestellt ist.

3. Vorrichtung nach Anspruch 1, **dadurch gekennzeichnet, dass** der Einsatz (67; 167) aus einem Kunststoffmaterial hergestellt ist.

4. Vorrichtung nach einem der Ansprüche 1 bis 3, **dadurch gekennzeichnet, dass** der Nocken (56) und die Aufnahme rotationssymmetrische Formen aufweisen und sich der Einsatz (67; 167) entlang einem zu der Aufnahme koaxialen Kreis erstreckt.

5. Vorrichtung nach Anspruch 4, **dadurch gekennzeichnet, dass** der Einsatz (67; 167) eine allgemein kreisbogenförmige Gestalt aufweist.

6. Vorrichtung nach einem der Ansprüche 1 bis 5, **dadurch gekennzeichnet, dass** das Gehäuse an dem Einsatz (167) angeformt ist.

7. Vorrichtung nach einem der Ansprüche 1 bis 5, **dadurch gekennzeichnet, dass** der Einsatz (67; 167) in einer entsprechenden Nut (65) des Gehäuses (61) angebracht und festgelegt ist.

8. Vorrichtung nach einem der Ansprüche 1 bis 7, **dadurch gekennzeichnet, dass** der Nocken (56) eine Spitzbogenform aufweist.

9. Vorrichtung nach einem der Ansprüche 1 bis 7, **dadurch gekennzeichnet, dass** der Nocken (256 eine Kugelform aufweist.

10. Vorrichtung nach einem der Ansprüche 1 bis 9, **dadurch gekennzeichnet, dass** sie des Weiteren zwei weitere Paare (321, 322) Befestigungselemente aufweist, die eine koaxiale Schwenkverbindung bilden, die dem ersten Teil (1, 305) bezüglich des zweiten Teils (4) Drehfreiheit entlang einer im Wesentlichen orthogonal zur Verriegelungsrichtung (Z) verlaufenden Achse verleiht.

11. Anwendung einer Vorrichtung nach einem der Ansprüche 1 bis 10 zur Befestigung eines Scheibenwischermechanismus an einer Autokarosserie.
